# EUROPÄISCHE PATENTSCHRIFT

(11) **EP 3 010 632 B1**
(45) Veröffentlichungstag und Bekanntmachung des Hinweises auf die Patenterteilung: **12.09.2018**
(21) Anmeldenummer: 14711152.0
(22) Anmeldetag: 13.03.2014
(51) Int. Cl.: B01F 13/08, B01F 13/00, B01F 15/06, B01L 7/00, G01K 11/26

(54) **MAGNETRÜHRER MIT SAW-SENSOR**
MAGNETIC STIRRER WITH SAW SENSOR
AGITATEUR MAGNÉTIQUE À CAPTEUR SAW

(30) Priorität: 18.06.2013 DE 102013010275
(43) Veröffentlichungstag der Anmeldung: 27.04.2016
(73) Patentinhaber: IKA - Werke GmbH & Co. KG, 79219 Staufen (DE)
(72) Erfinder: EBLE, Erhard, 79189 Bad Krozingen (DE); HENSLE, Thomas, 79206 Breisach (DE)
(74) Vertreter: Maucher Jenkins Patent- und Rechtsanwälte
(86) Internationale Anmeldenummer: PCT/EP2014/000678
(87) Internationale Veröffentlichungsnummer: WO 2014/202163

(56) Entgegenhaltungen:
- EP-A1- 2 287 584
- EP-A1- 2 527 808
- DE-A1-102010 046 426
- JP-A- 2010 017 626
- US-A1- 2005 183 582

## Beschreibung

Die Erfindung betrifft einen Magnetrührer mit einem Rührantrieb und mit einer Heizplatte als Aufstellfläche für ein Rührgefäß und mit einem in das Rührgefäß einlegbaren, von dem Rührantrieb angetriebenen, einen Magneten aufweisenden Rührstab.

Derartige Magnetrührer sind in vielfältiger Form bekannt und ermöglichen, das Rührmedium während des Rührens zu erhitzen oder unterschiedlich zu temperieren. Insbesondere bei länger andauernden Rührvorgängen kann es dabei notwendig sein, die Temperatur des Rührmediums zu überwachen, um die Gefahr eines Überhitzens oder Einkochens zu vermeiden.

Aus DE 33 42 249 C2 ist beispielsweise ein Magnetrührer bekannt, der zu diesem Zweck mit einem separaten, in das Rührmedium eintauchbaren, stabförmigen Thermometer als Temperatursensor ausgestattet ist.

Dabei hängt die Genauigkeit der Temperaturmessung von der Sorgfalt eines Benutzers ab, mit welcher dieser den Temperatursensor in dem Rührgefäß positioniert. Ferner kann ein solcher, in das Rührgefäß eintauchbarer Temperatursensor unter Umständen beispielsweise beim Hinzugeben von Rührgut oder beim Entnehmen von Proben aus dem Rührgefäß für den Benutzer störend und hinderlich sein.

Aus der JP 2010-017626 A ist ein Magnetrührer der eingangs definierten Art bekannt, der in seinem Rührstab einen Temperatursensor aufweist.

Aus der DE 10 2010 046 426 A1 ist eine Vorrichtung zur telemetrischen Temperaturmessung an oder in an hohen Temperaturen und/oder in rauer Umgebung eingesetzten Schwerindustrieanlagen- oder Schwerindustriemaschinenbauteilen oder Schwerindustriewerkzeugen vorbekannt, die einen SAW-Sensor als integralen Bestandteil eines in ein Schwerindustrieanlagen- oder Schwerindustriemaschinenbauteil oder Schwerindustriewerkzeug eingesetzten Temperaturmesselementes vorsieht.

Aus der EP 2 527 808 A1 ist eine Temperaturmessanordnung für ein Kochfeld vorbekannt, bei der zumindest ein SAW-Temperatursensor an einem Kochtopf und eine Ausleseeinheit für den wenigstens einen SAW-Sensor an dem Kochfeld vorgesehen sind.

Des Weiteren ist aus EP 2 287 584 A1 ein Messsystem zur drahtlosen Messung der Temperatur eines in einem Ofen positionierten Messobjektes vorbekannt, bei dem eine außerhalb des Ofenraumes befindliche Abfrageeinheit und mit mindestens einem passiv betriebenen, innerhalb des Ofenraumes frei beweglichen Temperaturfühler mit einem als Resonator ausgebildeten Temperatursensor vorgesehen sind.

Es besteht deshalb die Aufgabe, einen Magnetrührer der eingangs definierten Art zu schaffen, bei dem die Temperatur des Rührmediums ohne einen separaten Temperatursensor bestimmt werden kann.

Diese Aufgabe wird durch die in Anspruch 1 angegebene Erfindung gelöst. Vorteilhafte Ausgestaltungen sind den Unteransprüchen zu entnehmen.

Erfindungsgemäß ist ein Magnetrührer entsprechend Anspruch 1 geschaffen mit einem Rührantrieb und mit einer Heizplatte als Aufstellfläche für ein Rührgefäß und mit einem in das Rührgefäß einlegbaren, von dem Rührantrieb antreibbaren oder angetriebenen, einen Magneten aufweisenden Rührstab, wobei der Rührstab und/oder der Magnet wenigstens einen SAW-Sensor (Surface Acoustic Wave- oder Akustischer Oberflächenwellen-Sensor) aufweist und/oder enthält.
Somit wird zur Temperaturmessung kein separates Teil benötigt, das bei Bedarf von einem Benutzer in das Rührgefäß eingetaucht oder an einem Rand des Rührgefäßes befestigt werden muss. Stattdessen befinden sich die zur Temperaturmessung benötigen Teile in dem Rührstab und/oder dem Magneten, mit dem das Rührmedium verarbeitet werden kann, sowie in dem Magnetrührer.
Die Verwendung eines SAW-Sensors zur Temperaturmessung hat den Vorteil, das für den Betrieb des Sensors keine eigene Stromversorgung benötigt wird. Vielmehr erfolgt die Temperaturmessung durch Induzierung von akustischen Wellen mittels des SAW-Sensors. Das dazu benötigte elektrische Signal wird durch den Magnetrührer erzeugt und zu dem SAW-Sensor übertragen. Somit wird durch die Verwendung eines SAW-Sensors ein passiver Temperatursensor bereitgestellt, der dennoch eine drahtlose Abfrage der Temperatur des Rührmediums ermöglicht. SAW-Sensoren ermöglichen die Bestimmung von Temperaturen auf Grundlage des piezoelektrischen Effekts. Dazu werden mittels eines elektrisches Eingangssignals am SAW-Sensor akustische Wellen induziert. Die akustischen Wellen erzeugen an dem SAW-Sensor eine mechanische Resonanz, deren Frequenz temperaturabhängig ist. Der SAW-Sensor erzeugt ein elektrisches Ausgangssignal entsprechend der mechanischen Resonanz. Aus dem elektrischen Ausgangssignal, insbesondere aus dessen Frequenz, lässt sich die Temperatur am SAW-Sensor herleiten. Temperaturänderungen führen zu Frequenzänderungen des vom SAW-Sensor zurückkommenden Signals.

Dazu weist der SAW-Sensor erfindungsgemäß einen Wandler zur Umwandlung eines elektromagnetischen Signals in akustische und/oder mechanische Wellen und/oder von akustischen und/oder mechanischen Wellen in ein elektromagnetisches Signal auf. Der Wandler umfasst vorzugsweise einen Interdigital Transducer (IDT), der beispielsweise eine Metallstruktur auf einem piezoelektrischen Substrat umfasst.

In einer vorteilhaften Ausgestaltung umfasst der SAW-Sensor einen oder mehrere Reflektoren zum Reflektieren und/oder Richten von akustischen und/oder mechanischen Wellen auf den Wandler. Mit Hilfe von Reflektoren lässt sich der oben beschriebene Resonanzeffekt auf besonders effiziente Weise erzielen.

Vorzugsweise wird die Induzierung von akustischen Wellen am SAW-Sensor durch eine Temperaturabfragevorrichtung im Magnetrührer gesteuert. Dazu erzeugt die Temperaturabfragevorrichtung ein elektrisches Signal, welches als Eingangssignal zu dem SAW-Sensor übertragen wird. Das durch den SAW-Sensor wie oben beschrieben erzeugte Ausgangssignal wird zu der Temperaturabfragevorrichtung rückübertragen und dort zur Bestimmung der Temperatur verarbeitet. Somit können alle zur Temperaturbestimmung benötigen aktiven (d.h. stromverbrauchenden) Komponenten in dem Magnetrührer vorgesehen werden.

Der SAW-Sensor ist mit dem Rührstab in dem Rührmedium versenkt, sodass er den Benutzer bei der Handhabung des Rührgefäßes, bei der Zugabe von Rührmedium oder Rührgut oder bei der Entnahme von Proben aus dem Rührgefäß nicht beeinträchtigt. Darüber hinaus ist die Anordnung des SAW-Sensors an dem Rührstab auch deshalb günstig, weil sich der Rührstab in Gebrauchsstellung in unmittelbarer Nähe zu der Heizplatte befindet. Somit kann die Temperatur des Rührmediums nahe dem Ort des Hitzeeintrags bestimmt werden, was vorteilhaft sein kann, um die Erhitzung des Rührmediums zu überwachen und eine mögliche Überhitzung des Rührmediums während des Rührvorgangs zu vermeiden.

Erfindungsgemäß ist der SAW-Sensor mit einer ersten, an dem Rührstab angeordneten Antenne verbunden, die zum Empfang von elektromagnetischen Signalen und zum Senden von durch den SAW-Sensor erzeugten elektromagnetischen Strahlen ausgebildet ist.

Die kabellose Signalübertragung ist insbesondere deshalb günstig, weil der Rührstab während des Betriebes in seiner Gebrauchsstellung aufgrund eines ihn antreibenden magnetischen Drehfeldes rotiert.

Es kann zweckmäßig sein, wenn der Magnetrührer eine zweite, insbesondere als Sender ausgebildete Antenne aufweist, von der aus das elektromagnetische Signal zum Induzieren von akustischen Wellen am SAW-Sensor aussendbar ist.

Dabei können der Rührstab und der Magnetrührer zum berührungslosen Datenaustausch, insbesondere zur Übertragung der von dem SAW-Sensor erzeugten Ausgangssignale, mittels elektromagnetischer, hochfrequenter Wellen, vorzugsweise im Megahertz- oder Gigahertzbereich, über ihre Antennen ausgebildet sein. Somit ist es möglich, von dem SAW-Sensor Signale aus dem Rührgefäß heraus an den Magnetrührer zu übertragen, anhand derer die Temperatur des Rührmediums während des Rührvorgangs im Inneren des Rührgefäßes kontinuierlich bestimmbar und überwachbar ist.

Die Signalübertragung ist erleichtert, da der SAW-Sensor und/oder die erste Antenne an der Außenseite des Rührstabs und/oder an der Außenseite des Magneten angeordnet sind. Somit kann der SAW-Sensor möglichst nah an dem zu messenden Rührmedium angeordnet sein. Auch die Anordnung der Antenne an der Außenseite des Rührstabs bzw. des Magneten, kann vorteilhaft sein, um eine stabilere drahtlose Funkverbindung zwischen dem SAW-Sensor und der zweiten, beispielsweise an dem Magnetrührer und/oder an seinem Gehäuse angeordneten Antenne zu vereinfachen und eine mögliche Absorption des elektromagnetischen Signals zu reduzieren.

Die Signalübertragung von dem SAW-Sensor an die zweite Antenne kann noch stabiler erfolgen, wenn die erste Antenne der Länge nach um die Außenseite des Rührstabs und/oder um die Außenseite des Magneten herumgeführt und/oder herumgewickelt ist. Eine so gewickelte erste Antenne kann eine ausreichend große, sich günstig auswirkende Schlaufenlänge aufweisen, was insbesondere auch für die Induzierung akustischer Wellen druch den SAW-Sensor, von vorteilhafter Bedeutung sein kann.

Der Rührstab kann eine besonders kompakte Gestalt annehmen, wenn der Rührstab, der Magnet, der SAW-Sensor und die erste Antenne eine gemeinsame Umhüllung, insbesondere aus Kunststoff, aufweisen. Aufgrund der Umhüllung können der Rührstab, der SAW-Sensor und die erste Antenne insbesondere luft- und/oder wasserdicht und somit vor Korrosion oder sonstigen Beschädigungen durch das Rührmedium geschützt sein.

Es kann zweckmäßig sein, wenn der SAW-Sensor und die erste Antenne mit Hilfe der Umhüllung an dem Rührstab und/oder an dem Magneten befestigt sind und/oder der Rührstab von der Umhüllung und den von der Umhüllung umhüllten Teilen gebildet ist. Auf diese Weise können separate Befestigungsmittel und/oder Montageschritte vermieden werden.

Um die Distanz zwischen der ersten, an dem Rührstab bzw. an dem Magneten angeordneten Antenne für den SAW-Sensor und der zweiten an dem Magnetrührer angeordneten Antenne möglichst klein zu halten, kann die zweite, an dem Magnetrührer angeordnete Antenne benachbart zu der Heizplatte angeordnet sein. Insbesondere für die Induzierung von elektromagnetischen Wellen kann es vorteilhaft sein, wenn die Distanz zwischen den beiden Antennen etwa gleich dem Radius der Heizplatte, also möglichst gering ist.

Bei einer besonders zweckmäßigen Ausführungsform der Erfindung kann zur Anzeige des mit Hilfe des SAW-Sensors ermittelten Temperaturmesswertes eine an dem Magnetrührer angeordnete Anzeigevorrichtung oder eine mit dem Magnetrührer drahtlos, insbesondere über Funk verbundene, separate Anzeigevorrichtung vorgesehen sein. Somit ist es möglich, den Temperaturmesswert über die Anzeigevorrichtung an einen Benutzer des Magnetrührers visuell und/oder gegebenenfalls akustisch auszugeben.

Insbesondere bei einer kabellos mit dem Magnetrührer verbundenen Anzeigevorrichtung kann diese mit einer eigenen dritten, zum Empfang eines elektromagnetischen Signals eingerichteten Antenne ausgerüstet sein. Dann ist es auch möglich, dass Signale von dem SAW-Sensor über seine erste Antenne direkt an die dritte Antenne der Anzeigevorrichtung übertragen wird und dort zur Bestimmung von Temperaturmesswerten verarbeitet werden.

Es ist auch möglich, dass der Magnetrührer mit einer Steuer- und/oder Regeleinrichtung verbunden ist, über die der Rührantrieb und/oder die Heizplatte des Magnetrührers in Abhängigkeit von dem ermittelten Temperaturmesswert Steuer- und/oder regelbar ist. So kann der Steuer- und/oder Regeleinrichtung ein Wert für die Temperatur vorgegeben sein, bei dem, sobald das Rührmedium eine diesem Wert entsprechende Temperatur angenommen hat, die Heizplatte abgeschaltet wird, um eine Überhitzung des Rührmediums zu verhindern. Ebenso ist es denkbar, die Erwärmung des Rührmediums mit: Hilfe der ermittelten Temperatur zu überwachen und beispielsweise die Drehzahl des Rührantriebes mit Hilfe der Steuer- und/oder Regeleinrichtung zu erhöhen, sobald eine Temperatur gemessen wird, die einen vorgegebenen Grenzwert überschreitet. Weitere Steuer- und/oder Regelfälle sind denkbar.

Bei einer anderen Ausgestaltungsform der Erfindung ist es möglich, dass die Steuer- und/oder Regeleinrichtung drahtlos, insbesondere über Funk, mit dem Magnetrührer und/oder mit dem SAW-Sensor und/oder mit der Anzeigevorrichtung verbunden und/oder zum gegenseitigen Austausch ausgebildet ist.

Vorzugsweise kann der Magnet passend zu dem Rührstab ebenfalls stabförmig ausgebildet sein.

Nachstehend ist anhand der Zeichnung ein Ausführungsbeispiel der Erfindung näher beschrieben. Es zeigt in schematisierter Darstellung:
- Fig. 1: eine perspektivische Darstellung eines erfindungsgemäßen Magnetrührers mit einem auf seiner Heizplatte aufgestellten Rührgefäß und einem im Inneren des Rührgefäß befindlichen Rührstab mit einem stabförmigen Magneten, welcher Rührstab einen SAW-Sensor aufweist, der über eine in dem Rührstab angeordnete Antenne in drahtloser Datenverbindung zu dem Magnetrührer und zu einer separaten, externen Anzeigevorrichtung steht,
- Fig. 2: einen Längsschnitt des in Fig. 1 dargestellten Rührstabes mit dem darin angeordneten stabförmigen Magneten, der Antenne und dem SAW-Sensor,
- Fig. 3: einen Interdigital Transducer IDT, der in dem SAWSensor vorgesehen ist.

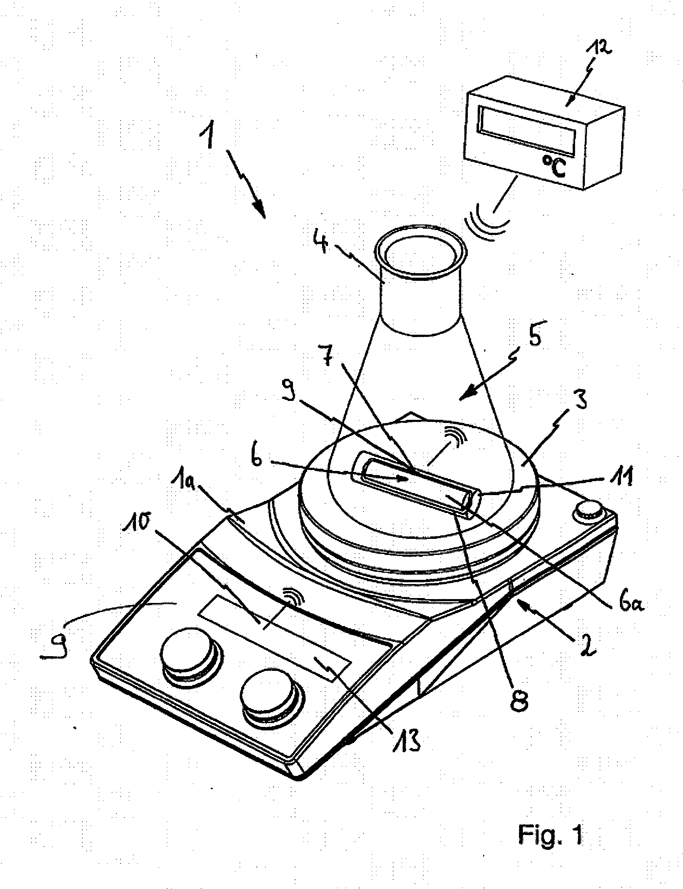

Fig. 1 : zeigt einen Magnetrührer 1 mit einem in seinem Inneren angeordneten Rührantrieb 2 und einer an seiner in Gebrauchsstellung oberen Seite angeordneten Heizplatte 3. Die Heizplatte 3 dient als Aufstellfläche für ein Rührgefäß 4, welches Rührgefäß 4 in seinem Innenraum 5 einen Rührstab 6 hat.

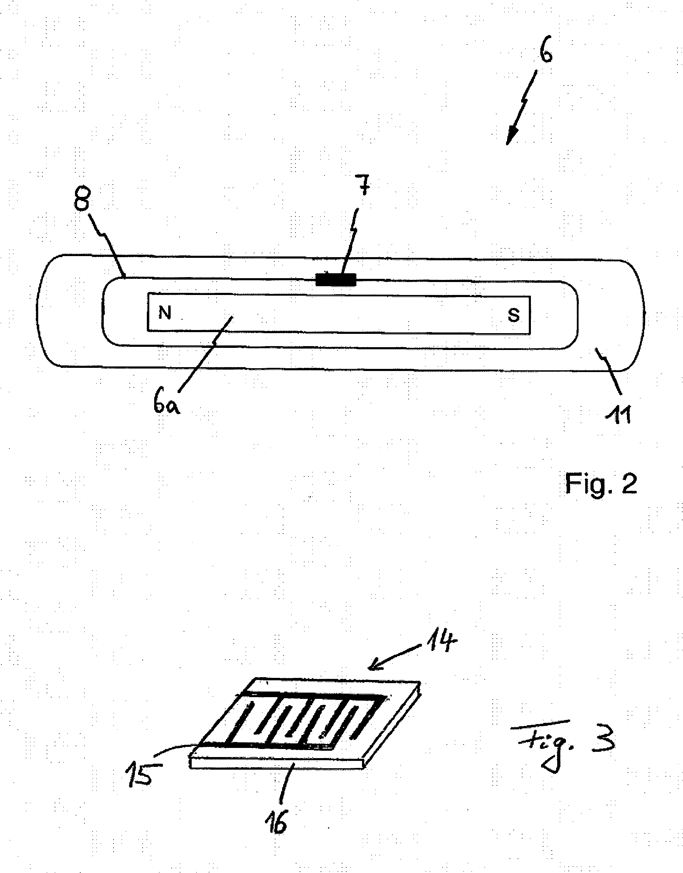

Anhand Fig.2 ist besonders gut zu erkennen, dass der Rührstab 6 in seinem Inneren einen stabförmigen Magneten 6a aufweist, der durch einen rotierenden Magneten oder durch ein magnetisches Drehfeld des Rührantriebs 2 in Rotation versetzt wird und so der Durchmischung eines in dem Innenraum 5 des Rührgefäßes 4 befindlichen Rührmediums dient.

Der Magnet 6a ist in dem Ausführungsbeispiel stabförmig und weist an einem seiner beiden Enden seinen mit N bezeichneten Nordpol und an dem entgegengesetzten Ende seinen mit S bezeichneten Südpol auf.

Bei einer nicht dargestellten Ausführungsform kann der Rührstab 6 bzw. der Magnet im Inneren: des Rührstabes 6 aber auch eine Kreisringform oder die Form eines ovalen, elliptischen öder mehreckigen, insbesondere drei- oder vier- oder fünf- oder sechseckigen Ringes aufweisen.

Zur Bestimmung der Temperatur des Rührmediums weist der Rührstab 6 bzw. der stabförmige Magnet 6a einen SAW-Sensor 7 (Surface Acoustic Wave- oder Akustischer Oberflächenwellen-Sensor) als Temperatursensor auf. SAW-basierte Temperatursensoren machen sich den piezoelektrischen Effekt zu Nutze. Dabei werden durch den SAW-Sensor mittels eines elektrischen Eingangssignals akustische oder mechanische Wellen induziert und anschließend wieder in ein elektrisches Ausgangssignal rückverwandelt. Die Frequenz der auf diese Weise erzeugten Wellen ist temperaturabhängig, so dass die Temperatur des Rührmediums aus der Frequenz des Ausgangssignal herleitbar ist.

Insbesondere erfolgt die Bestimmung der Temperatur des Rührmediums in folgenden Schritten: Eine Temperaturabfragevorrichtung 9 erzeugt ein hochfrequentes elektrisches Signal, das durch eine Antenne 10, die an dem Magnetrührer 1 beziehungsweise an seinem Gehäuse 1a angeordnet ist, in eine elektromagnetische Welle umgewandelt wird. Die elektromagnetische Welle wird durch eine am Rührstab 6 angeordnete Antenne 8 empfangen und in ein hochfrequentes elektrisches Signal (Eingangssignal) umgewandelt. Ein Interdigital Transducer (IDT) 14, der in oder an dem SAW-Sensor 7 angeordnet ist, wird durch das Eingangssignal zur Erzeugung von akustischen Wellen angeregt. Die akustischen Wellen werden auf den IDT 14 zurückgeworfen. Zu diesem Zweck weist der SAW-Sensor vorzugsweise Reflektoren auf. Hierdurch wird ein Resonator geschaffen, wobei die Resonanzfrequenz von der Temperatur abhängig ist. Der IDT 14 wandelt die Eigenschwingung des Resonators in ein elektrisches Signal (Ausgangssignal) um, das über die Antenne 8 in ein elektromagnetisches Signal umgewandelt wird, welches zu der Antenne 10 am Magnetrührer 1 übertragen und dort zur Bestimmung der Temperatur durch die Temperaturabfragevorrichtung 9 verarbeitet wird.

Die Figur 3 zeigt schematisch den IDT 14. Der IDT 14 dient zur Umwandlung von elektrischen Signalen in akustische Wellen und umgekehrt. Der IDT 14 umfasst ein piezoelektrisches Substrat 16, auf dem Elektroden 15 aufgebracht sind. Die Elektroden werden durch zwei kammartige Strukturen gebildet, die vorzugsweise aus Metall bestehen. Das piezoelektrische Substrat 16 besteht beispielsweise aus Quarz oder Lithiumniobat.

Die Verwendung des SAW-Sensors 7 hat den Vorteil, dass ein Temperatursensor geschaffen ist, der keine eigene Stromversorgung, beispielsweise mittels einer Batterie oder eines Kondensators, benötigt wird. Dadurch kann der SAW-Sensor in vorteilhafter Weise in oder an dem Rührstab angeordnet werden. Die Anordnung des SAW-Sensors 7 an dem Rührstab 6 hat den Vorteil, dass die Temperatur des Rührmediums in einem Bereich unmittelbar oberhalb der Heizplatte 3 bestimmt werden kann, wo der Wärmeeintrag in das Rührmedium stattfindet und die Gefahr des Überhitzens am größten ist. Somit ist es möglich, beispielsweise einen über einen bestimmten Grenzwert reichenden Temperaturanstieg des Rührmediums mit dem SAW-Sensor 7 möglichst unmittelbar, also ohne öder mit nur geringer Verzögerung zu erfassen.

Gemäß den Figuren ist der SAW-Sensor 7 mit der an dem Rührstab 6 angeordneten Antenne 8 verbunden, welche Antenne 8 zum Senden und Empfangen von elektromagnetischen Signalen ausgebildet ist. Die Antenne 8 ist eine in dem Ausführungsbeispiel gemäß Fig. 2 um den stabförmigen Magneten 6a umlaufende Drahtwicklung oder - schlaufe.

Das elektromagnetische Feld kann von der Antenne 10, die an dem Magnetrührer 1 beziehungsweise an seinem Gehäuse 1a angeordnet ist, übertragen werden. Das von der Antenne 10 ausgesandte elektromagnetische Feld wird von der an dem Rührstab 6 angeordneten Antenne 8 aufgenommen und wie oben beschrieben zur Erzeugung des elektrischen Eingangssignals für den IDT 14 verwendet.

Um die Übertragung des elektromagnetischen Feldes von der Antenne 10 zu verbessern, ist die Antenne 8 an der Außenseite des stabförmigen Magneten 6a angeordnet. Ebenso befinden sich der SAW-Sensor 7 und der Stromspeicher 9 an der Außenseite des stabförmigen Magneten 6a.

Wie in Fig. 2 besonders gut zu erkennen ist, ist zur Vergrößerung der Antennenlänge der Antenne 8, diese der Länge nach um die Außenseite des Rührstabs 6 bzw. um die Außenseite des stabförmigen Magneten 6a herumgeführt beziehungsweise gewickelt. Wie Fig. 1 ebenfalls zeigt, weisen der Rührmagnet 6a, der SAW-Sensor 7 und die Antenne 8 eine gemeinsame Umhüllung 11 auf, die vorzugsweise aus Kunststoff besteht und mit den umhüllten Teilen den Rührstab 6 bildet. Zur Verbesserung der Wärmeleitung kann die Umhüllung aber auch ganz oder teilweise aus Edelstahl oder Keramik gestaltet sein.

Mit Hilfe der Umhüllung 11 sind der SAW-Sensor 7 und die Antenne 8 an dem Rührstab 6 befestigt. Die Umhüllung 11 kann, insbesondere wenn sie aus Kunststoff besteht, um den Rührstab 6 bzw. den stabförmigen Magneten 6a, den SAW-Sensor 7 und die Antenne 8 herumgegossen werden und diese so luft- und/oder wasserdicht einkapseln und vor Beschädigungen und Korrosion schützen.

Die an dem Magnetrührer 1 vorgesehene Antenne 10 ist benachbart zu der Heizplatte 3 angeordnet. Die Antenne 10 kann dabei an der Außenseite des Gehäuses 1a des Magnetrührers 1 oder im Inneren des Gehäuses 1a des Magnetrührers 1 angeordnet sein.

Zur Anzeige des mit der Temperaturabfragevorrichtung 9 ermittelten Temperaturmesswertes ist gemäß Fig. 1 eine Anzeigevorrichtung 12, die mit dem Magnetrührer drahtlos, insbesondere über Funk verbunden ist, vorgesehen. In einer nicht dargestellten Ausführungsform der Erfindung kann vorgesehen sein, dass diese Anzeigevorrichtung 12 über ein Kabel mit dem Magnetrührer 1 verbunden oder direkt an den Magnetrührer 1 selbst angeordnet ist.

Zudem ist es möglich, die ermittelten Temperaturmesswerte auch in einem in Fig. 1 an dem Gehäuse 1a des Magnetrührers 1 erkennbaren Display 13 anzugeben.

Der Magnetrührer 1 ist ferner mit einer Steuer- und/oder Regeleinrichtung in seinem Inneren verbunden. Mittels der Steuer- und/oder Regeleinrichtung kann der Rührantrieb 2 und/oder die Heizplatte 3 des Magnetrührers 1 in Abhängigkeit von den ermittelten Temperaturmesswerten gesteuert beziehungsweise geregelt werden.

In einer nicht dargestellten Ausführungsform der Erfindung kann besagte Steuer- und/oder Regeleinrichtung auch drahtlos, insbesondere über Funk mit dem Magnetrührer 1 und/oder mit dem SAW-Sensor 7 und/oder mit der Anzeigevorrichtung 12 verbunden und/oder zum gegenseitigen Datenaustausch ausgebildet sein, sodass die Steuer- und/oder Regeleinrichtung auch als externes, gesondertes Teil ausgebildet sein kann.

Der Magnetrührer 1 weist einen Rührantrieb 2 und eine Heizplatte 3 auf. Die Heizplatte 3 des Magnetrührers 1 dient dabei als Aufstellfläche für das Rührgefäß 4 in welches der von dem Rührantrieb 2 angetriebene Rührstab 6 einlegbar ist. Zur Überwachung der Temperatur des in dem Innenraum 5 des Rührgefäßes 4 befindlichen Rührmediums weist der Rührstab 6 den wenigstens einen SAW-Sensor 7 auf. Der SAW-Sensor 7 ist mit der ersten, an dem Rührstab 6 angeordneten Antenne 8 verbunden. An dem Magnetrührer 1 bzw. an dem Gehäuse 1a ist die zweite Antenne 10 vorgesehen, die benachbart zu der Heizplatte 3 angeordnet ist. Eine Temperaturabfragevorrichtung 9 bestimmt die Temperatur des Rührmediums anhand von den durch den SAW-Sensor 7 induzierten und von der Antenne 8 zu der Antenne 10 übertragenen elektromagnetischen Wellen.

### Bezugszeichenliste

1 Magnetrührer
2 Rührantrieb
3 Heizplatte
4 Rührgefäß
5 Innenraum
6 Rührstab
6a Magnet
7 SAW-Sensor
8 Antenne
9 Temperaturabfragevorrichtung
10 Antenne
11 Umhüllung
12 Anzeigevorrichtung
13 Display
14 Interdigital Transducer
15 Elektroden
16 Piezoelektrisches Substrat

## Patentansprüche

1. Magnetrührer (1) mit einem Rührantrieb (2) und mit einer Heizplatte (3) als Aufstellfläche für ein Rührgefäß (4) und mit einem in das Rührgefäß (4) einlegbaren, von dem Rührantrieb antreibbaren oder angetriebenen, einen Magneten (6a) aufweisenden Rührstab (6), **dadurch gekennzeichnet, dass** der Rührstab (6) und/oder der Magnet (6a) wenigstens einen SAW-Sensor (7) aufweist und/oder enthält, wobei der SAW-Sensor (7) einen Wandler zur Umwandlung eines elektromagnetischen Signals in akustische und/oder mechanische Wellen und/oder von akustischen und/oder mechanischen Wellen in ein elektromagnetisches Signal aufweist, wobei der SAW-Sensor (7) mit einer ersten, an dem Rührstab (6) angeordneten Antenne (8) verbunden ist, wobei die erste Antenne (8) zum Empfangen von elektromagnetischen Signalen und zum Senden von durch den Wandler erzeugten elektromagnetischen Signalen ausgebildet ist, und wobei der SAW-Sensor (7) und/oder die erste Antenne (8) an der Außenseite des Rührstabs (6) und/oder an der Außenseite des Magneten (6a) angeordnet sind.

2. Magnetrührer (1) nach Anspruch 1, wobei der Wandler durch einen Interdigital Transducer IDT gebildet wird.

3. Magnetrührer (1) nach Anspruch 2, wobei der IDT eine Metallstruktur auf einem piezoelektrischen Substrat umfasst.

4. Magnetrührer (1) nach einem der Ansprüche 1 bis 3, wobei der SAW-Sensor einen oder mehrere Reflektoren zum Reflektieren und/oder Richten von akustischen und/oder mechanischen Wellen auf den Wandler umfasst.

5. Magnetrührer (1) nach einem derAnsprüche 1 bis 4, wobei die erste Antenne (8) der Länge nach um die Außenseite des Rührstabs (6) und/oder um die Außenseite des Magneten (6a) herum geführt und/oder herumgewickelt ist.

6. Magnetrührer (1) nach einem der Ansprüche 1 bis 5, wobei der Rührstab (6), der Magnet (6a), der SAW-Sensor (7) und die erste Antenne (8) eine gemeinsame Umhüllung (11) aufweisen, die insbesondere ganz oder teilweise aus Kunststoff, Keramik oder Edelstahl besteht.

7. Magnetrührer (1) nach Anspruch 6, wobei der SAW-Sensor (7) und die erste Antenne (8) mithilfe der Umhüllung (11) an dem Rührstab (6) und/oder an dem Magneten (6a) befestigt sind und/oder der Rührstab (6) von der Umhüllung (11) und den von der Umhüllung (11) umhüllten Teilen gebildet ist.

8. Magnetrührer (1) nach einem der Ansprüche 1 bis 7, wobei der Magnetrührer (1) eine zweite, insbesondere als Sender ausgebildete Antenne (10) aufweist.

9. Magnetrührer (1) nach Anspruch 8, wobei der Rührstab (6) und der Magnetrührer (1) zur Übertragung elektromagnetischer, hochfrequenter Wellen, vorzugsweise im Megahertz- oder Gigahertzbereich, über ihre Antennen (8, 10) ausgebildet sind.

10. Magnetrührer (1) nach einem der Ansprüche 8 oder 9, wobei die zweite, an dem Magnetrührer (1) vorgesehene Antenne (10) benachbart zu der Heizplatte (3) angeordnet ist.

11. Magnetrührer (1) nach einem der Ansprüche 1 bis 10, umfassend eine Datenverarbeitungsvorrichtung zur Bestimmung eines Temperaturmesswertes auf Grundlage der durch den SAW-Sensor (7) erzeugten Signale.

12. Magnetrührer (1) nach Anspruch 11, wobei zur Anzeige des Temperaturmesswertes eine an dem Magnetrührer (1) angeordnete Anzeigevorrichtung (12) oder eine mit dem Magnetrührer (1) drahtlos, insbesondere über Funk verbundene, separate Anzeigevorrichtung (12) vorgesehen ist.

13. Magnetrührer (1) nach Anspruch 11 oder 12, wobei der Magnetrührer (1) mit einer Steuer- und/oder Regeleinrichtung verbunden ist, über die der Rührantrieb (2) und/oder die Heizplatte (3) des Magnetrührers (1) in Abhängigkeit von dem Temperaturmesswert steuer- und/oder regelbar ist.

14. Magnetrührer (1) nach Anspruch 13, wobei die Steuer- und/oder Regeleinrichtung drahtlos, insbesondere über Funk, mit dem Magnetrührer (1) und/oder mit dem SWA-Sensor (7) und/oder mit der Anzeigevorrichtung (12) verbunden und/oder zum gegenseitigen Datenaustausch ausgebildet ist.

## Claims

1. Magnetic stirrer (1) having a stirring drive (2) and having a heating plate (3) serving as a surface on which a stirring vessel (4) is positioned, and having a stirring rod (6) which can be introduced into the stirring vessel (4), either can be or is driven by the stirring drive and comprises a magnet (6a), **characterized in that** the stirring rod (6) and/or the magnet (6a) has and/or contains at least one SAW sensor (7), wherein the SAW sensor (7) has a transducer for converting an electromagnetic signal into acoustic and/or mechanical waves, and/or acoustic and/or mechanical waves into an electromagnetic signal, wherein the SAW sensor (7) is connected to a first antenna (8) arranged on the stirring rod (6), wherein the first antenna (8) is designed for receiving electromagnetic signals and for sending electromagnetic signals generated by the transducer, and wherein the SAW sensor (7) and/or the first antenna (8) are arranged an the outside of the stirring rod (6) and/or an the outside of the magnet (6a).

2. Magnetic stirrer (1) according to Claim 1, wherein the transducer is formed by an interdigital transducer IDT.

3. Magnetic stirrer (1) according to Claim 2, wherein the IDT comprises a metal structure on a piezoelectric substrate.

4. Magnetic stirrer (1) according to any one of Claims 1 to 3, wherein the SAW sensor comprises one or a plurality of reflectors for reflecting and/or directing acoustic and/or mechanical waves onto the transducer.

5. Magnetic stirrer (1) according to any one of Claims 1 to 4, wherein the first antenna (8) is guided and/or wound lengthwise around the outside of the stirring rod (6) and/or around the outside of the magnet (6a).

6. Magnetic stirrer (1) according to any one of Claims 1 to 5, wherein the stirring rod (6), the magnet (6a), the SAW sensor (7) and the first antenna (8) have a common sheath (11), which, in particular, is composed wholly or partly of plastic, ceramic or stainless steel.

7. Magnetic stirrer (1) according to Claim 6, wherein the SAW sensor (7) and the first antenna (8) are fixed to the stirring rod (6) and/or to the magnet (6a) by means of the sheath (11), and/or the stirring rod (6) is formed by the sheath (11) and the parts which are surrounded by the sheath (11).

8. Magnetic stirrer (1) according to any one of Claims 1 to 7, wherein the magnetic stirrer (1) has a second antenna (10), implemented in particular as a transmitter.

9. Magnetic stirrer (1) according to Claim 8, wherein the stirring rod (6) and the magnetic stirrer (1) are designed for transmitting high-frequency electromagnetic waves, preferably in the Megahertz or Gigahertz range, via their antennas (8, 10).

10. Magnetic stirrer (1) according to either one of Claims 8 and 9, wherein the second antenna (10), which is provided on the magnetic stirrer (1), is arranged adjacent to the heating plate (3).

11. Magnetic stirrer (1) according to any one of Claims 1 to 10, comprising a data processing device for determining a temperature reading on the basis of the signals generated by the SAW sensor (7).

12. Magnetic stirrer (1) according to Claim 11, wherein in order to display the temperature reading either a display device (12) arranged on the magnetic stirrer (1), or a separate display device (12) which is wirelessly connected, in particular by radio, to the magnetic stirrer (1), is provided.

13. Magnetic stirrer (1) according to Claim 11 or 12, wherein the magnetic stirrer (1) is connected to a control and/or regulating device, by means of which the stirring drive (2) and/or the heating plate (3) of the magnetic stirrer (1) can be controlled and/or regulated as a function of the temperature reading.

14. Magnetic stirrer (1) according to Claim 13, wherein the control and/or regulating device is wirelessly connected, in particular by radio, to the magnetic stirrer (1) and/or to the SAW sensor (7) and/or to the display device (12) and/or is designed for bidirectional data transfer.

## Revendications

1. Agitateur magnétique (1) avec un entraînement d'agitation (2) et avec une plaque chauffante (3) comme surface de dépôt pour un récipient d'agitation (4) et avec une barre d'agitation (6) pouvant être introduite dans le récipient d'agitation (4), pouvant être ou étant entraînée par l'entraînement d'agitation et présentant un aimant (6a), **caractérisé en ce que** la barre d'agitation (6) et/ou l'aimant (6a) présente et/ou contient au moins un capteur SAW (7), dans lequel le capteur SAW (7) présente un convertisseur pour la conversion d'un signal électromagnétique en ondes acoustiques et/ou mécaniques et/ou d'ondes acoustiques et/ou mécaniques en un signal électromagnétique, dans lequel le capteur SAW (7) est relié à une première antenne (8) disposée sur la barre d'agitation (6), dans lequel la première antenne (8) est conçue pour la réception de signaux électromagnétiques et pour l'émission de signaux électromagnétiques produits par le convertisseur, et dans lequel le capteur SAW (7) et/ou la première antenne (8) est/sont disposé(s) sur le côté extérieur de la barre d'agitation (6) et/ou sur le côté extérieur de l'aimant (6a).

2. Agitateur magnétique (1) selon la revendication 1, dans lequel le convertisseur est formé par un transducteur interdigital lDT.

3. Agitateur magnétique (1) selon la revendication 2, dans lequel l'IDT comprend une structure métallique sur un substrat piézoélectrique.

4. Agitateur magnétique (1) selon l'une quelconque des revendications 1 à 3, dans lequel le capteur SAW comprend un ou plusieurs réflecteur(s) pour la réflexion et/ou l'orientation d'ondes acoustiques et/ou mécaniques vers le convertisseur.

5. Agitateur magnétique (1) selon l'une quelconque des revendications 1 à 4, dans lequel la première antenne (8) est menée et/ou enroulée en longueur autour du côté extérieur de la barre d'agitation (6) et/ou autour du côté extérieur de l'aimant (6a).

6. Agitateur magnétique (1) selon l'une quelconque des revendications 1 à 5, dans lequel la barre d'agitation (6), l'aimant (6a), le capteur SAW (7) et la première antenne (8) présentent une enveloppe commune (11), qui se compose en particulier entièrement ou partiellement de matière plastique, de céramique ou d'acier allié.

7. Agitateur magnétique (1) selon la revendication 6, dans lequel le capteur SAW (7) et la première antenne (8) sont fixés à la barre d'agitation (6) et/ou à l'aimant (6a) au moyen de l'enveloppe (11) et/ou la barre d'agitation (6) est formée par l'enveloppe (11) et par les parties enveloppées par l'enveloppe (11).

8. Agitateur magnétique (1) selon l'une quelconque des revendications 1 à 7, dans lequel l'agitateur magnétique (1) présente une seconde antenne (10) configurée en particulier comme émetteur.

9. Agitateur magnétique (1) selon la revendication 8, dans lequel la barre d'agitation (6) et l'agitateur magnétique (1) sont configurés pour la transmission d'ondes électromagnétiques à haute fréquence, de préférence dans le domaine des mégahertz ou des gigahertz, par l'intermédiaire de leurs antennes (8, 10).

10. Agitateur magnétique (1) selon une des revendications 8 ou 9, dans lequel la seconde antenne (10) prévue sur l'agitateur magnétique (1) est disposée à proximité de la plaque chauffante (3).

11. Agitateur magnétique (1) selon l'une quelconque des revendications 1 à 10, comprenant un dispositif de traitement de données pour la détermination d'une valeur de mesure de température sur la base des signaux produits par le capteur SAW (7).

12. Agitateur magnétique (1) selon la revendication 11, dans lequel il est prévu pour l'affichage de la valeur de mesure de température un dispositif d'affichage (12) disposé sur l'agitateur magnétique (1) ou un dispositif d'affichage séparé (12) relié sans fil, en particulier par radio, à l'agitateur magnétique (1).

13. Agitateur magnétique (1) selon la revendication 11 ou 12, dans lequel l'agitateur magnétique (1) est relié à un dispositif de commande et/ou de régulation, par lequel l'entraînement d'agitation (2) et/ou la plaque chauffante (3) de l'agitateur magnétique (1) peut être commandé(e) et/ou régulé(e) en fonction de la valeur de mesure de température.

14. Agitateur magnétique (1) selon la revendication 13, dans lequel le dispositif de commande et/ou de régulation est relié sans fil, en particulier par radio, à l'agitateur magnétique (1) et/ou au capteur SAW (7) et/ou au dispositif d'affichage (12) et/ou est configuré pour un échange de données réciproque.
